# EUROPEAN PATENT SPECIFICATION

(11) **EP 1 523 158 B1**
(45) Date of publication and mention of the grant of the patent: **27.08.2008**
(21) Application number: 04022349.7
(22) Date of filing: 20.09.2004
(51) Int. Cl.: H04M 1/725, H01Q 1/24, G06K 19/07

(54) **Cellular phone and battery pack used for the cellular phone**
Mobilfunktelefon und Batteriesatz dafür
Téléphone mobile et bloc d'accumulateur pour téléphone mobile

(30) Priority: 08.10.2003 JP 2003348933
(43) Date of publication of application: 13.04.2005
(73) Proprietor: NEC CORPORATION, Tokyo (JP)
(72) Inventor: Yamashita, Hajime, c/o NEC Saitama, Ltd., Kamikawamachi Kodama-gun Saitama (JP)
(74) Representative: Vossius & Partner

(56) References cited:
- EP-A- 1 280 099
- WO-A-00/79771
- WO-A-01/73684
- US-B1- 6 236 368
- PATENT ABSTRACTS OF JAPAN vol. 2002, no. 12, 12 December 2002 (2002-12-12) -& JP 2002 218031 A (AI DENKI TSUSHIN KK; NATIONAL STUDENTS INFORMATION CENTER), 2 August 2002 (2002-08-02)
- PATENT ABSTRACTS OF JAPAN vol. 2003, no. 06, 3 June 2003 (2003-06-03) & JP 2003 037861 A (HITACHI CABLE LTD), 7 February 2003 (2003-02-07)

## Description

The present invention relates to a cellular phone and a battery pack used for the cellular phone, particularly to a cellular phone including a non-contact IC card function and a battery pack used for the cellular phone.

In the field of IC cards, a non-contact IC card is rapidly spread and application of the card to various fields is widened like an IC card for automatic examination of tickets in means of transportation because of convenience of non-contact communication with no battery. Because this type of the non-contact IC card transmits and receives data in accordance with a non-contact communication system, it is not necessary to insert a card into a card reader/writer. Therefore, a technique for using a cellular phone by mounting the non-contact IC card function (RFID function: Radio Frequency Identification function) is also proposed (refer to JP-A-2002-218031 (Patent Document 1) and JP-A-2003-37861 (Patent Document 2)).

How to set a RFID antenna becomes a problem when mounting the above-mentioned RFID function on a cellular phone. The RFID antenna is a loop antenna. According to the characteristic of the loop antenna, the antenna sensitivity is further improved as the antenna opening becomes larger and the communication distance is increased. Moreover, when a metal is put nearby the antenna, the antenna sensitivity is extremely deteriorated even if the opening is large and a problem occurs that an expected communication distance cannot be obtained. Therefore, in the case of a cellular phone for which decrease in thickness and cost is requested, it is necessary to decrease the cellular phone in thickness and cost while securing the RFID antenna characteristic.

When referring to Patent Document 1, the technique for setting the RFID function (both RFID antenna and IC card) in the body of a cellular phone is only disclosed but a configuration for decreasing the cellular phone in thickness and cost while securing the above RFID antenna characteristic is not disclosed.

Moreover, when referring to Patent Document 2, a structure is disclosed in which the whole RFID function is set in the cover of the battery portion of a cellular phone. In the case of this structure, an RFID antenna is also set in the cover of the battery portion. As the setting method, a technique is shown in which an RFID antenna is embedded in the molded portion of the cover and resin-sealed. In the case of this technique, the manufacturing processes of the cover of the battery portion is increased, the manufacturing cost is increased, and the wall thickness of the cover is also increased.

WO 00/79771 discloses an interchangeable battery pack for a mobile telephone which includes battery cells, electric feeding contacts for supplying power to the mobile telephone, an RFID antenna and a RFID communication controller
WO 01/73684 discloses a non-contact data carrier which includes a battery provided with a chip and an antenna.

It is an object of the present invention to provide a cellular phone without spoiling a small thickness and low cost while keeping the antenna characteristic, a battery pack used for the cellular phone, and a connector.

Functions of the present invention are described below. An RFID antenna is mounted on the battery pack of a cellular phone. In this case , bykeeping a predetermined clearance between the antenna and a battery cell, bad influences by the metallic plate of the battery cell are eliminated. Moreover, for the electrical connection of the battery pack with the circuit portion for an RFID function, it is not necessary to prepare a special connector by using a battery connector. Furthermore, by using a configuration of mounting the antenna on the battery pack, it is possible to form a loop antenna having a large opening and the characteristic also becomes preferable.

According to the present invention, by setting an RFID antenna in a battery cell and connecting the antenna with an RFID-function circuit portion by a battery connector, special assembly is unnecessary and it is possible to set the function of a non-contact IC card in a cellular phone with a simple configuration. Thus, there is an advantage that a low price can be maintained.

Moreover, the influence of the battery pack in the battery cell on the RFID antenna is eliminated by securing a very small (1 to 2 mm) clearance between the battery pack and the antenna. Therefore, there is an advantage that the non-contact IC card function can be built in a cellular phone without spoiling the small thickness of the cellular phone. Furthermore, by forming the antenna on the flat plate portion of the battery pack like a loop, advantages are obtained that the opening becomes large and the antenna characteristic can be also preferably maintained.

Embodiments of the present invention are described below by referring to the accompanying drawings.
FIGS. 1A and 1B are illustrations showing an example of a battery back of an embodiment of the present invention, in which FIG. 1A is a top view and FIG. 1B is a side view;
FIG. 2 is an illustration showing a relation between distances (clearances) between a metallic plate and an RFID antenna and card-side induced voltages;
FIG. 3 is an equivalent-function block diagram of an embodiment of the present invention;
FIGS. 4A and 4B are illustrations showing the battery connector in FIG. 3, in which FIG. 4A is a top view and FIG. 4B is a side view;
FIGS. 5A and 5B are illustrations showing an example of the battery pack of another embodiment of the present invention, in which FIG. 5A is a top view and FIG. 5B is a side view;
FIGS. 6A and 6B are illustrations showing an example of the battery connector in FIG. 5, in which FIG. 6A is a top view and FIG. 6B is a side view;
FIG. 7 is a back view of a general cellular phone;
FIGS. 8A and 8B are illustrations showing an example of a battery pack used for a general cellular phone, in which FIG. 8A is a top view and FIG. 8B is a side view;
FIGS. 9A and 9B are illustrations showing an example of the battery connector in FIG. 8, in which FIG. 9A is a top view and FIG. 9B is a side view;
FIG. 10 is an equivalent function block diagram of the general cellular phone in FIG. 7;
FIG. 11 is an equivalent circuit diagram of anRFID-function non-contact IC card and a reader/writer; and
FIG. 12 is an illustration for explaining operations of the circuit in FIG. 11.

Before describing the embodiments, a general cellular phone and a non-contact IC card having an RFID function are described.

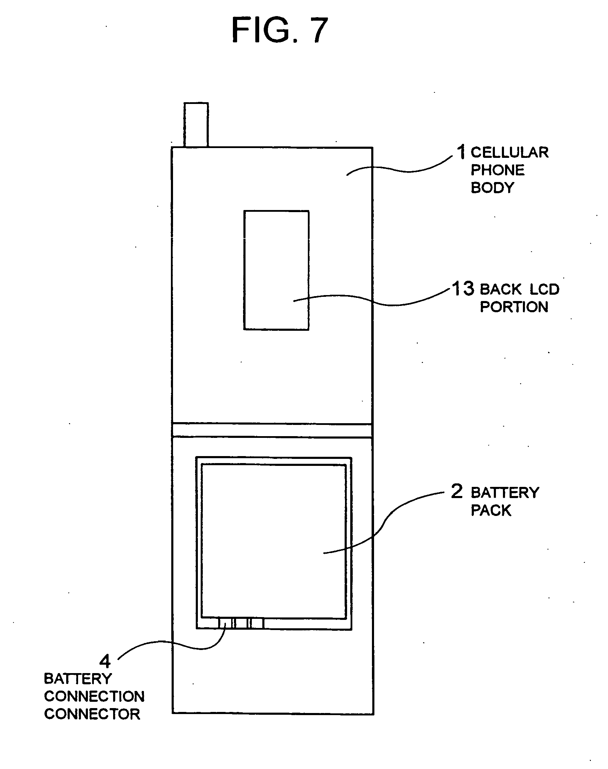

First, FIG. 7 is a back view of a general cellular phone, in which a back LCD portion 13 and a battery pack 2 are set to the cellular phone body 1 and the battery pack 2 is removably set to the cellular phone body 1 and therefore, a battery connector 4 is set to the cellular phone body 1.

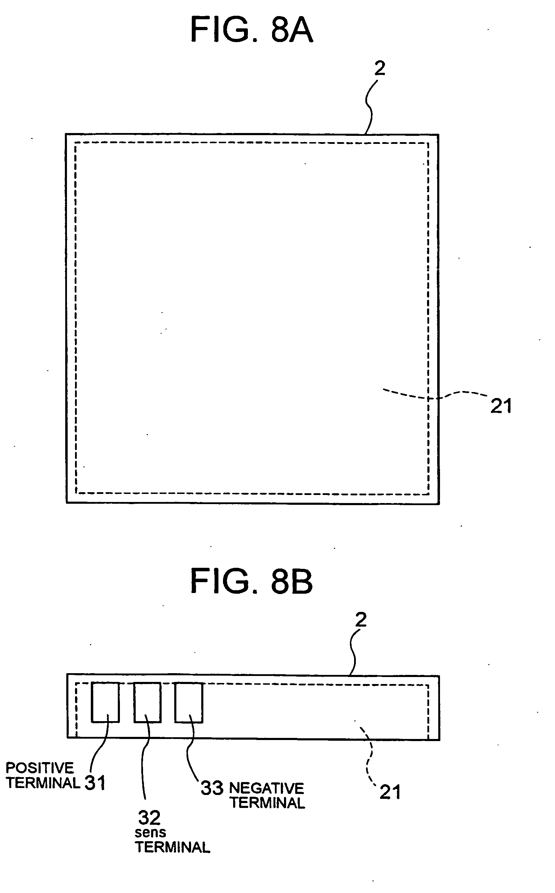

FIGS. 8A and 8B show a structure of the battery pack 2, in which FIG. 8A is a top view and FIG. 8B is a side view. A battery cell 21 is built in the body of the battery pack 2 and not only a positive terminal 31 and a negative terminal 33 but also a sens terminal 32 are set to the battery cell 21. When mounting the battery pack 2 on the cellular phone body 1 shown in FIG. 7, these terminals 31 to 33 are connected to the battery connector 4. The sens terminal 32 serves as an output terminal for a temperature sensor.

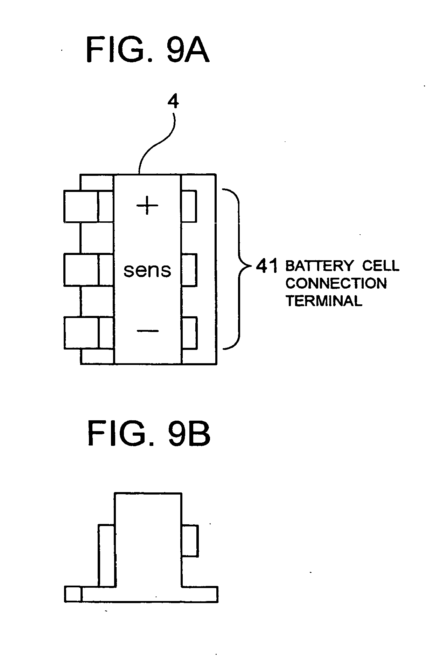

FIGS. 9A and 9B show a structure of the battery connector 4. FIG. 9A is a top view of the structure and FIG. 9B is a side view of the structure, and a reference numeral 41 denotes a battery cell connection terminal.

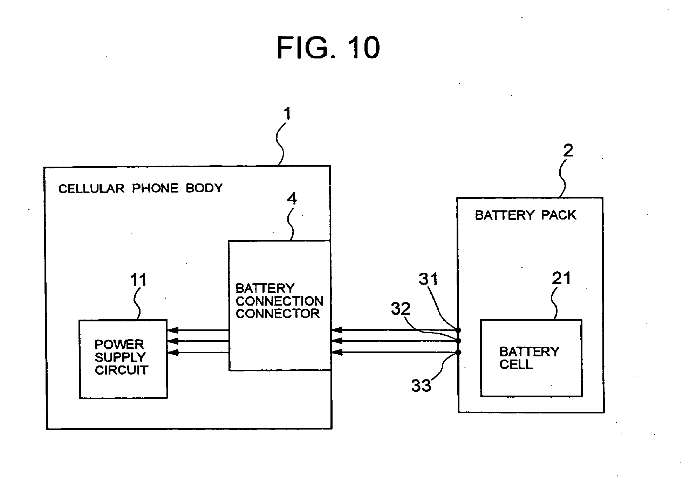

FIG. 10 is an equivalent function block diagram showing a relation between the cellular phone body 1 and the battery pack 2, in which an equivalent portion as that in FIGS. 7 to 9 is shown by the same symbol. The terminals 31 to 33 of the battery cell 21 are connected to a power supply circuit 11 in the cellular phone body 1 through the battery connector 4 to supply power.

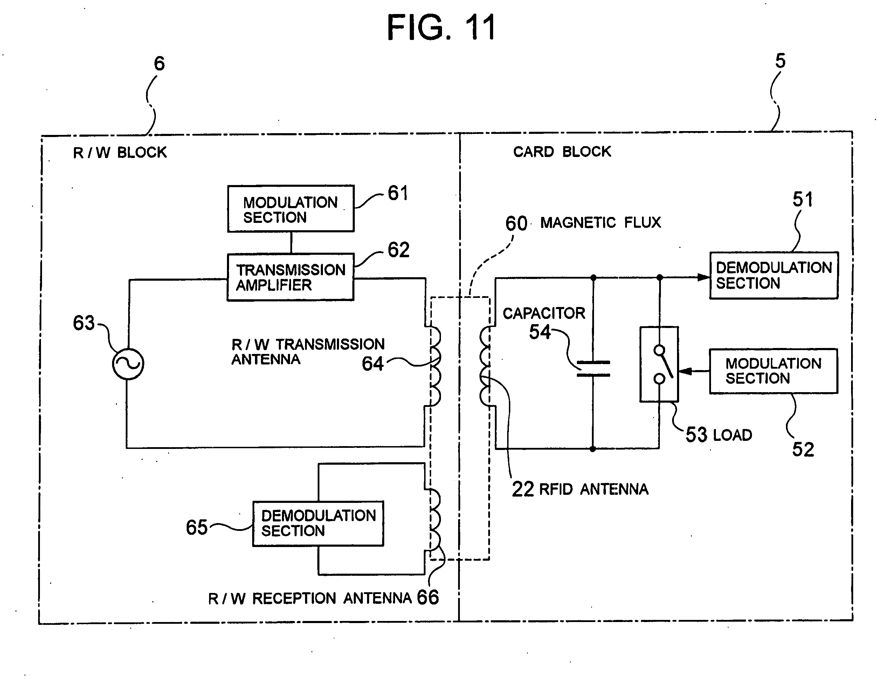

FIG. 11 is an equivalent circuit diagram for explaining the communication principle of a general RFID function. In FIG. 11, a R/W (reader/writer) block 6 and a card block 5 are used for a general RFID function. In the R/W block 6, a 13.56 MHz AC signal generated by an oscillating section 63 is amplified by a transmission amplifier 62 and supplied to a R/W transmission antenna 64 as a current. Because the 13.56 MHz AC current passes through the R/W transmission antenna 64, a magnetic flux 60 proportional to the current is generated around the antenna.

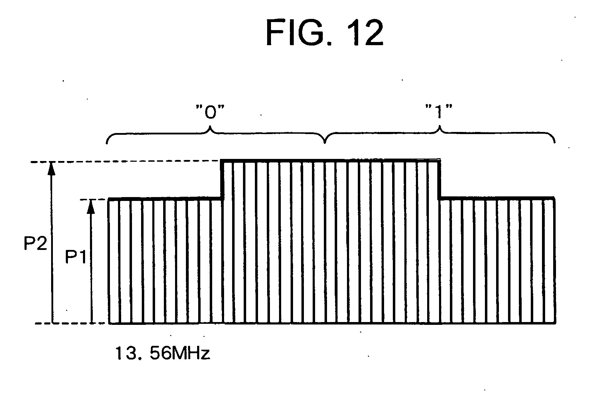

Moreover, because the current and magnetic flux passing through the R/W transmission antenna 64 are changed as shown in FIG. 12 in accordance with the current amplification rate of the transmission amplifier 62 to be switched correspondingly to the control by a modulation section 61, ASK (Amplitude Shift Keying) modulation is performed.

In the case of the card block 5, a modulation signal is received by an RFID antenna 22 for a card being interlinked with the magnetic flux 60 generated by the R/W transmission antenna 64 and supplied to a demodulation section 51 to realize communication. Moreover, a capacitor 54 set in parallel with an antenna 55 constitutes a resonator together with the antenna 22 and is adjusted so that a resonant frequency becomes 13.56 MHz.

Transmission signal from the card block 5 is received by a demodulation section 65 when a load 53 is switching-controlled through the control by a modulation section 52 to detect a change of magnetic fluxes generated by the R/W transmission antenna 64 being interlocked with an R/W reception antenna 66 in the R/W block 6.

When mounting the above card block 5 on a cellular phone, a method for mounting the RFID antenna (antenna for card) 22 for efficiently interlocking the magnetic flux 60 generated by the R/W transmission antenna 64 becomes a problem as described above. For example, when a metallic plate having the same size as the RFID antenna 22 is present on the same face as the antenna, it is hardly possible to induce electric power in the card block 5.

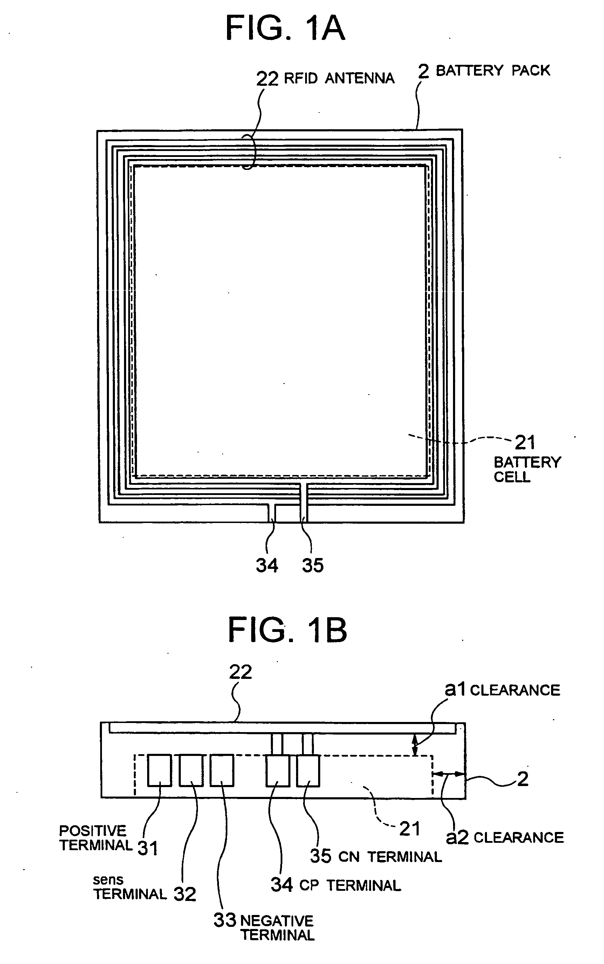

Therefore, in the case of the embodiment of the present invention, as shown in FIGS. 1A and 1B, the influence of the metallic face of the battery cell 21 is eliminated by mounting the RFID antenna 22 on the battery pack 2 and securing necessary clearances a1 and a2 in the battery pack 2 between the battery cell 21 which is a metallic body and the RFID antenna 22.

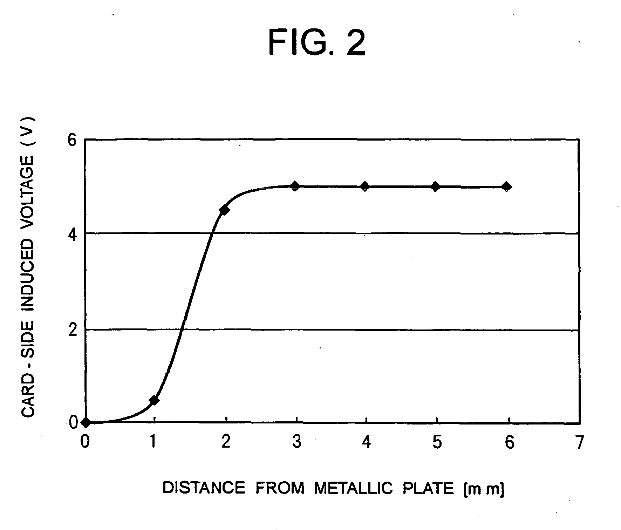

FIG. 2 shows a relation between card-side induced voltages and distances between a metallic plate and an RFID antenna. As shown in FIG. 2, by separating the RFID antenna 22 from the battery cell 21 by 1 to 2 mm, it is found that sudden improvement of an induced voltage in the antenna 22 can be achieved.

Thus, to mount an RFID function on a cellular phone, by securing a clearance of 1 to 2 mm between the RFID antenna 22 and the battery cell 21 and setting the antenna 22 in a battery pack, it is possible to mount the RFID antenna keeping the characteristic preferable without spoiling the small thickness and low price of the cellular phone.

By forming the RFID antenna 22 like a loop on the flat portion of the battery pack 2, the opening is increased in size and the antenna characteristic is preferably maintained.

In FIGS. 1A and 1B, FIG. 1A is a top view and FIG. 1B is a side view, in which a structure of securing the above clearances a1 and a2 for the battery cell 21, building the antenna 22 in the battery pack 2, and setting positive and negative terminals (CP and CN terminals) 34 and 35 on the same face as three terminals 31 to 33 of the battery cell 21 of the battery pack 2 is used.

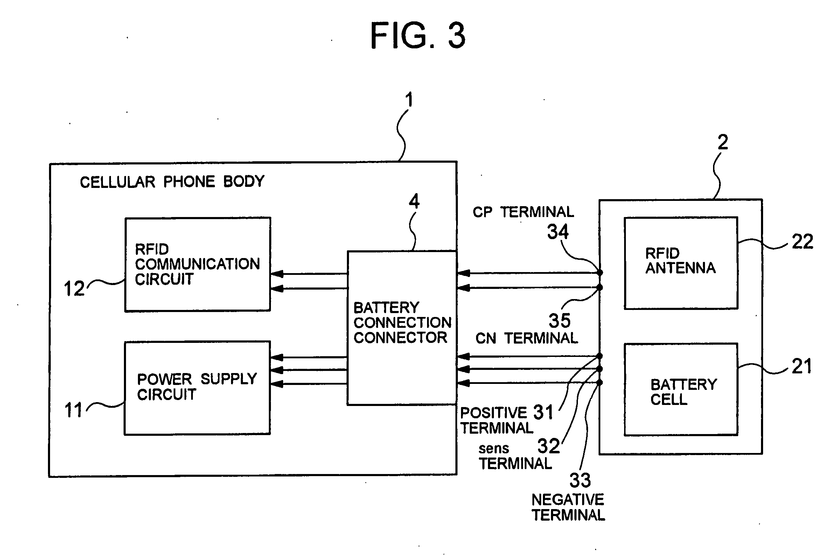

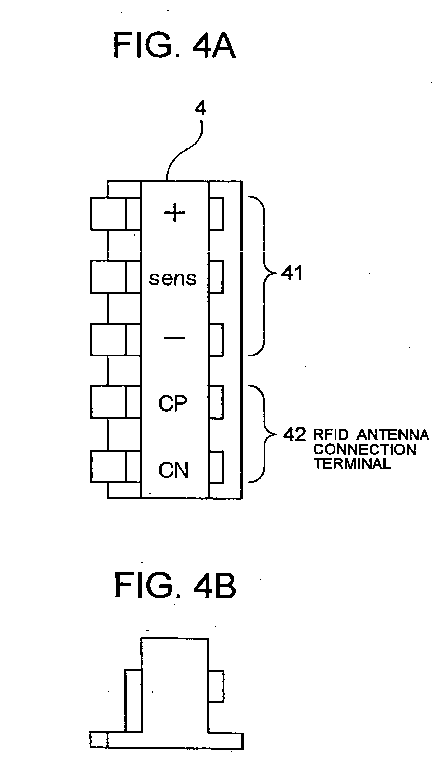

FIG. 3 is an equivalent-function block diagram corresponding to the above described FIG. 10 in the case of an embodiment of the present invention, in which the same portion as those in FIGS. 1 and 2 and FIG. 10 is shown by the same symbol. This embodiment uses a configuration in which the terminals 34 and 35 of the RFID antenna 22 are connected with an RFID communication circuit 12 in the cellular phone body 1 through the battery connector 4 in addition to the configuration of FIG. 10. In this case, the battery connector 4 has the structure shown in FIGS. 4A and 4B. That is, two terminals (card positive terminal CP and card negative terminal CN) shown by reference numeral 42 serve as RFID antenna connection terminals.

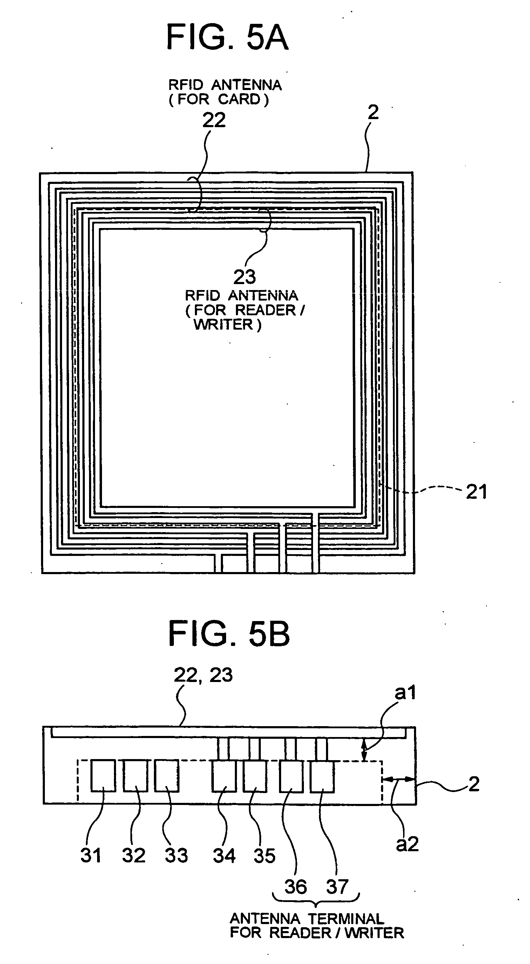

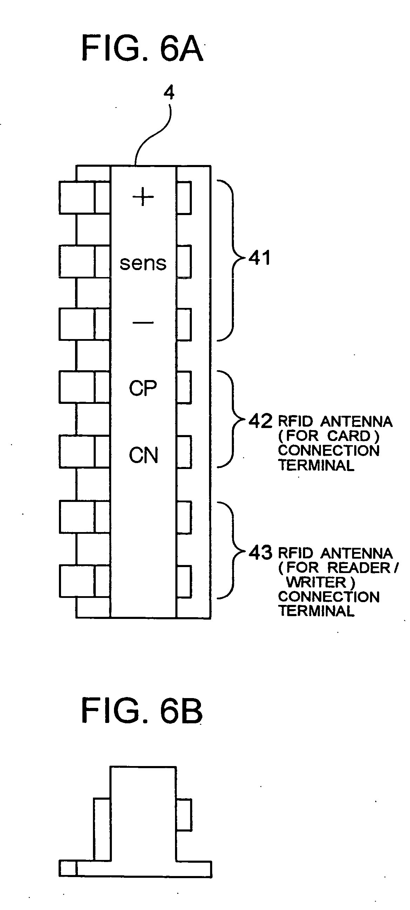

FIGS. 5A and 5B are a top view (FIG. 5A) and a side view (FIG. 5B) of the battery pack 2 showing another embodiment of the present invention, in which the same portion as that in FIG. 1 is shown by the same symbol. In the case of this embodiment, a cellular phone is provided with the reader/writer function of a non-contact IC card in addition to the non-contact IC card function. An RFID antenna 23 for reader/writer is mounted on the battery pack 2 together with the RFID antenna 22 for a card and connector terminals 36 and 37 for this are added. FIGS. 6A and 6B are a top view (FIG. 6A) and a side view (FIG. 6B) of the battery connector 4 used for this embodiment.

By providing a reader/writer function for a cellular phone, it is possible to confirm the content of a non-contact IC card. However, when providing a writer function, a problem may occur because data can be freely written in the IC card. In this case, however, it is necessary to provide only a reader function. In short, also when an antenna is added, there is an advantage that correspondence is easily possible.

## Claims

1. A battery pack (2) adapted to be removably set to a cellular phone body (1) of a cellular phone, the cellular phone body including therein a communication circuit (12) for non-contact IC card function, and a power supply circuit (11), the battery pack comprising a battery cell having first terminals (31, 32, 33) connectable to the power supply circuit (11), **characterised by** the battery pack comprising:
a built-in antenna (22) for the non-contact IC card function having second terminals (34, 35) connectable to the communication circuit,
wherein the second terminals (34, 35) are provided on the same face of the battery pack (2) as the first terminals (31, 32, 33).

2. The battery pack according to claim 1, wherein the cellular phone has reader/writer means of a non-contact IC card, the battery pack further comprising an antenna (23) for the reader/writer function having third terminals (36, 37) connectable to the reader/writer means of the cellular phone.

3. The battery pack according to claim 1 or 2, wherein the battery cell (21) of the battery pack and the antenna (22) have a predetermined clearance (a1).

4. The battery pack according to any one of claims 1 to 3, wherein the built-in antenna (22) is formed like a loop on a flat portion of the battery pack.

5. A cellular phone comprising:
a battery pack according to any one of claims 1 to 4; and
a cellular phone body (1) including therein a communication circuit (12) for non-contact IC card function and a power supply circuit (11).

6. The cellular phone according to claim 5, wherein the cellular phone body (1) further includes a connector (4) for connection with the first terminals (31, 32, 33) and the second terminals (34, 35).

7. The cellular phone according to claim 5 or 6, further including a reader/writer function of a non-contact IC card, wherein an antenna (23) for the reader/writer function is set in the battery pack (2).

8. The cellular phone according to claim 7, wherein the antenna (23) for the reader/writer function is connected with its electric circuit portion via a connector of the battery pack.

## Patentansprüche

1. Batteriesatz (2) zum lösbaren Einsetzen in ein Mobiltelefongehäuse (1) eines Mobiltelefons, wobei im Mobiltelefongehäuse ein Kommunikationsschaltkreis (12) für kontaktlose IC-Karten-Funktionalität und ein Stromversorgungsschaltkreis (11) vorgesehen sind, und der Batteriesatz eine Batteriezelle mit ersten Anschlüssen (31, 32, 33) aufweist, die mit dem Stromversorgungsschaltkreis (11) verbindbar sind,
**dadurch gekennzeichnet, dass** der Batteriesatz aufweist:
eine eingebaute Antenne (22) für die kontaktlose IC-Karten-Funktionalität mit zweiten Anschlüssen (34, 35), die mit dem Kommunikationsschaltkreis verbindbar sind,
wobei die zweiten Anschlüsse (34, 35) an derselben Seite des Batteriesatzes (2) vorgesehen sind wie die ersten Anschlüsse (31, 32, 33).

2. Batteriesatz nach Anspruch 1, wobei das Mobiltelefon eine Lese/Schreib-Einrichtung für kontaktlose IC-Karten und der Batteriesatz eine Antenne (23) für die Lese/Schreib-Funktionalität mit dritten Anschlüssen (36, 37) aufweist, die mit der Lese/Schreib-Einrichtung des Mobiltelefons verbindbar sind.

3. Batteriesatz nach Anspruch 1 oder 2, wobei die Batteriezelle (21) des Batteriesatzes (2) und die Antenne (22) einen vorbestimmten Abstand (a1) haben.

4. Batteriesatz nach einem der Ansprüche 1 bis 3, wobei die eingebaute Antenne (22) schleifenförmig an einem ebenen Abschnitt des Batteriesatzes (2) ausgebildet ist.

5. Mobiltelefon mit:
einem Batteriesatz (2) nach einem der Ansprüche 1 bis 4 und
einem Mobiltelefongehäuse (1), in dem ein Kommunikationsschaltkreis (12) für kontaktlose IC-Karten-Funktionalität und ein Stromversorgungsschaltkreis (11) vorgesehen sind.

6. Mobiltelefon nach Anspruch 5, wobei das Mobiltelefongehäuse (1) einen Verbinder (4) zur Verbindung mit den ersten Anschlüssen (31, 32, 33) und den zweiten Anschlüssen (34, 35) aufweist.

7. Mobiltelefon nach Anspruch 5 oder 6, ferner mit einer Lese/Schreib-Funktion der kontaktlosen IC-Karte, wobei eine Antenne (23) für die Lese/Schreib-Funktionalität in dem Batteriesatz (2) angeordnet ist.

8. Mobiltelefon nach Anspruch 7, wobei die Antenne (23) für die Lese/Schreib-Funktion mit ihrem Schaltkreisabschnitt über einen Verbinder des Batteriesatzes (2) verbunden ist.

## Revendications

1. Bloc de batteries (2) apte à être installé de manière amovible à un corps de téléphone cellulaire (1) d'un téléphone cellulaire, le corps de téléphone cellulaire comportant un circuit de communication (12) pour une fonction de carte à circuit intégré (IC) sans contact, et un circuit d'alimentation électrique (11), le bloc de batteries comportant une cellule de batterie présentant des premières bornes (31, 32, 33) connectables au circuit d'alimentation électrique (11), **caractérisé en ce que** le bloc de batteries comporte :
une antenne intégrée (22) pour la fonction de carte à circuit intégré (IC) sans contact présentant des deuxièmes bornes (34, 35) connectables au circuit de communication,
dans lequel les deuxièmes bornes (34, 35) sont délivrées sur la même face du bloc de batteries (2) que les premières bornes (31, 32, 33).

2. Bloc de batteries selon la revendication 1, dans lequel le téléphone cellulaire présente des moyens de lecture/écriture de la carte à circuit intégré (IC) sans contact, le bloc de batteries comportant en outre une antenne (23) pour la fonction de lecture/écriture présentant des troisièmes bornes (36, 37) connectables aux moyens de lecture/écriture du téléphone cellulaire.

3. Bloc de batteries selon la revendication 1 ou 2, dans lequel la cellule de batterie (21) du bloc de batteries et l'antenne (22) ont un espacement prédéterminé (a1).

4. Bloc de batteries selon l'une quelconque des revendications 1 à 3, dans lequel l'antenne intégrée (22) est formée à la manière d'une boucle sur une partie plate du bloc de batteries.

5. Téléphone cellulaire comportant :
un bloc de batteries selon l'une quelconque des revendications 1 à 4 ; et
un corps de téléphone cellulaire (1) comportant un circuit de communication (12) pour une fonction de carte à circuit intégré (IC) sans contact, et un circuit d'alimentation électrique (11).

6. Téléphone cellulaire selon la revendication 5, dans lequel le corps de téléphone cellulaire (1) comporte en outre un connecteur (4) pour une connexion avec les premières bornes (31, 32, 33) et les deuxièmes bornes (34, 35).

7. Téléphone cellulaire selon la revendication 5 ou 6, comportant en outre une fonction de lecture/écriture d'une carte à circuit intégré (IC) sans contact, où une antenne (23) pour la fonction de lecture/écriture est installée dans le bloc de batteries (2).

8. Téléphone cellulaire selon la revendication 7, dans lequel une antenne (23) pour la fonction de lecture/écriture est connectée avec sa partie de circuit électrique via un connecteur du bloc de batteries.
